# EUROPÄISCHE PATENTSCHRIFT

(11) **EP 4 177 683 B1**
(45) Veröffentlichungstag und Bekanntmachung des Hinweises auf die Patenterteilung: **04.06.2025**
(21) Anmeldenummer: 21206573.4
(22) Anmeldetag: 04.11.2021
(51) Int. Cl.: G05B 19/042

(54) **FELDGERÄT, MESSANORDNUNG UND VERFAHREN ZUR BEREITSTELLUNG EINES AUSGANGSSIGNALS**
FIELD DEVICE, MEASURING SYSTEM AND METHOD FOR PROVIDING AN OUTPUT SIGNAL
APPAREIL DE TERRAIN, AGENCEMENT DE MESURE ET PROCÉDÉ DE FOURNITURE D'UN SIGNAL DE SORTIE

(43) Veröffentlichungstag der Anmeldung: 10.05.2023
(73) Patentinhaber: VEGA Grieshaber KG, 77709 Wolfach (DE)
(72) Erfinder: Kech, Günter, 77709 Wolfach (DE); Haas, Jürgen, 77709 Oberwolfach (DE); Rank, Fabian, 77709 Wolfach (DE); Waldecker, Natalie, 79365 Rheinhausen (DE)
(74) Vertreter: Patentanwälte Bauer Vorberg Kayser

(56) Entgegenhaltungen:
- DE-A1- 102020 110 025

## Beschreibung

Die Erfindung betrifft ein Feldgerät mit einer Versorgungs-Zweileiterschnittstelle, die zur Aufnahme von Energie über ein Zweileitersystem und zur Signalübertragung über das Zweileitersystem geeignet ist, mit einem integrierten Sensor, mit mindestens einer Zusatz-Schnittstelle, die zum Signalempfang geeignet ist, und mit einer Funktionseinheit oder Funktionsgruppe zur Daten- und/oder Signalverarbeitung, die mit der Versorgungs-Zweileiterschnittstelle, der Zusatz-Schnittstelle und dem integrierten Sensor gekoppelt ist. Die Funktionseinheit oder Funktionsgruppe des Feldgeräts ist zur Ausführung der nachfolgenden Schritte eingerichtet: Erhalt mindestens eines ersten Eingangssignals von dem integrierten Sensor, Erhalt mindestens eines zweiten Eingangssignals von der Zusatz-Schnittstelle, und Generierung eines Ausgangssignals auf Grundlage des mindestens einen ersten Eingangssignals sowie des mindestens einen zweiten Eingangssignals. Die Erfindung betrifft ferner eine Messanordnung und ein Verfahren zur Bereitstellung eines Ausgangssignals.

Unter dem Begriff Feldgerät werden verschiedene technische Einrichtungen subsummiert, die mit einem Produktionsprozess in direkter Beziehung stehen. "Feld" bezeichnet dabei den Bereich außerhalb von Leitwarten. Feldgeräte können damit insbesondere Aktoren, Sensoren und Messumformer sein. In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Typische Anwendungsszenarien für solche Feldgeräte umfassen Bereiche wie die Hochwasservorhersage, die Lagerbestandsverwaltung oder auch andere dezentral verteilte Messaufgaben.

Unter einem Zweileiter-Feldgerät wird ein Feldgerät verstanden, das über zwei Leitungen mit einer übergeordneten Einheit verbunden ist, wobei über diese beiden Leitungen sowohl eine Energieversorgung als auch eine Messwertübermittlung stattfindet. Die Energie- und/oder Signalübertragung zwischen einem solchen Feldgerät und der übergeordneten Einheiten erfolgt in der Regel nach dem bekannten 4 mA bis 20 mA Standard, bei dem eine 4 mA bis 20 mA Stromschleife, das heißt eine Zweidrahtleitung, zwischen dem Feldgerät und der übergeordneten Einheit ausgebildet ist. Zusätzlich zu der analogen Übertragung von Signalen besteht die Möglichkeit, dass die Feldgeräte gemäß verschiedenen anderen Protokollen, insbesondere digitalen Protokollen, weitere Informationen an die übergeordnete Einheit übermitteln oder von dieser empfangen. Beispielhaft seien hierfür das HART-Protokoll oder das Profibus-PA-Protokoll genannt.

Feldgeräte, die nur durch ein Zweileitersystem gespeist werden, weisen beispielsweise im Vergleich zu Vierleiterfeldgeräten einen erheblich reduzierten Aufwand für Installation und Verdrahtung auf. Bei solchen Zweileiterfeldgeräten entfällt die zusätzliche Installation und Verdrahtung einer Versorgungsspannung komplett, da diese, wie oben dargestellt über die Zweidrahtleitung erfolgt. Dies bietet insbesondere in Anwendungen, in denen Vorschriften zum Explosionsschutz zu beachten sind, erhebliche Vorteile, da die separaten Leitungen für die Versorgungsspannung und die dafür erforderlichen zusätzlichen Komponenten schon bei der Planung zu berücksichtigen sind.

Zweileiterfeldgeräte können eigensicher ausgestaltet werden und haben damit einen erweiterten Einsatzbereich in explosionsgeschützten (Ex-) Bereichen. Wartungsarbeiten an Feldgeräten in Ex-Bereichen sind bei Zweileiterfeldgeräten deutlich einfacher und sicherer als beispielsweise bei Vierleiterfeldgeräten, da sie gefahrlos auch bei laufendem Messbetrieb erfolgen können. Bei Vierleiter-Geräten hingegen muss zunächst die Stromversorgung unterbrochen und gegen Wiedereinschaltung gesichert werden. Dies erfolgt in aller Regel in den Anschlussräumen, die sich oft in großer Entfernung von der Messstelle befinden.

Aus der US 2018/0203135 A1 ist ein modulares Messsystem für radiometrische Messungen bekannt. Das modulare Messsystem weist eine Zweileiterschnittstelle auf. In einem Grundmodul des Messsystems ist ein radiometrischer Sensor angeordnet. Ein Erweiterungsmodul des Messsystems ist mit zusätzlichen Schnittstellen ausgestattet, über die das modulare Messsystem beispielsweise Messwerte empfangen oder mit Energie versorgt werden.

Die Druckschrift DE 10 2020 110025 A1 beschreibt eine Messanordnung mit einem Zweileiter-Feldgerät. Das Zweileiter-Feldgerät ist mit einem weiteren Zweileiter-Feldgerät verbunden. Das Zweileiter-Feldgerät kann Daten von dem weiteren Zweileiter-Feldgerät empfangen. Zur Kommunikation mit dem weiteren Zweileiter-Feldgerät weist das Zweileiter-Feldgerät eine Zweileiter-Schnittstelle auf. Das Zweileiter-Feldgerät kann Daten oder Messwerte des weiteren Zweileiter-Feldgeräts empfangen und bei der eigenen Messwertbestimmung und/oder Messwertberechnung verarbeiten.

Aus dem Stand der Technik ist es hingegen nicht bekannt, dass ein Feldgerät mit unterschiedlichen Feldgeräten oder Sensoren zusammenarbeitet. Demgegenüber ist es eine Aufgabe der Erfindung, ein Feldgerät bereitzustellen, das Daten oder Messwerte unterschiedlicher Signalerzeuger verarbeiten kann. Es ist eine weitere Aufgabe der Erfindung, eine Messanordnung mit einem solchen Feldgerät bereitstellen. Ferner ist es eine Aufgabe der Erfindung, ein Verfahren anzugeben, das dazu geeignet ist, zur Erzeugung eines Ausgangssignals Sensorinformationen unterschiedlicher Signalerzeuger zu verarbeiten.

Die Aufgaben werden gelöst durch Angabe des Feldgeräts nach Anspruch 1, der Messanordnung nach Anspruch 12 und des Verfahrens zur Bereitstellung eines Ausgangssignals nach Anspruch 15. Die Unteransprüche betreffen verschiedene voneinander unabhängige, vorteilhafte Weiterbildungen der vorliegenden Erfindung, deren Merkmale vom Fachmann im Rahmen des technisch Sinnvollen frei miteinander kombiniert werden können. Dies gilt insbesondere auch über die Grenzen der verschiedenen Anspruchskategorien hinaus.

Gemäß einem Aspekt der Erfindung wird ein Feldgerät der eingangs genannten Gattung vorgeschlagen, wobei in dem Feldgerät erfindungsgemäß mehr als ein Berechnungsverfahren gespeichert ist, das zur Generierung des Ausgangssignals ausgeführt werden kann, wobei unterschiedliche Berechnungsverfahren für externe Signalerzeuger unterschiedlichen Typs, welche an die Zusatz-Schnittstelle angeschlossen sind, vorgesehen sind.

Ein Signal ist ein Zeichen mit einer bestimmten Bedeutung, die das Signal durch Verabredung oder durch Vorschrift erhält. Eine Information kann durch ein Signal transportiert werden. Bei dem mindestens einen ersten Eingangssignal, dem mindestens einen zweiten Eingangssignal und dem Ausgangssignal kann es sich erfindungsgemäß um digitale und/oder analoge Signale handeln. Beispielweise kann eine von dem integrierten Sensor gemessene Dichte durch eine elektrische Spannung dargestellt oder in Form eines digitalen Datenpakets übertragen werden. Das erste Eingangssignal und das zweite Eingangssignal geben bevorzugt Messwerte wieder. Das Ausgangssignal gibt bevorzugt ebenfalls einen Messwert wieder, zum Beispiel einen korrigierten, kompensierten oder auf andere Weise von dem Feldgerät bereinigten oder verarbeiteten Messwert.

Bei dem integrierten Sensor handelt es sich vorteilhaft um einen Sensor, der in oder an einem Gehäuse des Feldgeräts angeordnet ist. Der integrierte Sensor kann grundsätzlich ein Sensor beliebigen Typs sein. Die Generierung des Ausgangssignals geht so vonstatten, dass sowohl das erste Eingangssignal als auch das zweite Eingangssignal verwendet werden, um das Ausgangssignal zu generieren beziehungsweise zu berechnen. Besonders vorteilhaft ist es beispielsweise, wenn das zweite Eingangssignal dazu verwendet wird, um das erste Eingangssignal zu korrigieren. Gemäß Ausführungsformen der Erfindung ist es möglich, dass zur Generierung des Ausgangssignals aus dem ersten Eingangssignal und dem zweiten Eingangssignal das erste Eingangssignal und/oder das zweite Eingangssignal weiterverarbeitet, konvertiert oder in sonstiger Weise bearbeitet werden. Bei einer Schnittstelle im Sinne der vorliegenden Erfindung kann es sich um eine Einheit zur Übertragung von Energie und/oder Daten wie einen Transceiver oder dergleichen handeln, eine Schnittstelle kann aber erfindungsgemäß auch wesentlich einfacher ausgeführt sein und lediglich durch einen Anschluss bzw. Anschlüsse, Klemmen oder dergleichen gebildet sein.

Es ist erfindungsgemäß auch möglich, dass das Feldgerät ergänzend zu der Zusatz-Schnittstelle auch noch mindestens eine weitere Schnittstelle aufweist. Über die mindestens eine weitere Schnittstelle kann optional mindestens ein weiterer Messwert aufgenommen werden und als Basis zur Generierung des Ausgangssignals verwendet werden. Gemäß anderer Ausführungsformen wird die weitere Schnittstelle verwendet, um einen Wert auszugeben, zum Beispiel ein Signal, das ausgegeben wird, falls ein spezifischer Messwert auftritt. So kann zum Beispiel ein Signal ausgegeben werden, falls das erste Eingangssignal, das zweite Eingangssignal und/oder das Ausgangssignal einen bestimmten Wert annimmt oder überschreitet. Ferner ist es möglich, dass in dem Feldgerät mindestens ein vordefinierter Wert gespeichert ist, der zur Generierung des Ausgangssignals herangezogen wird. Bei dem vordefinierten Wert kann es sich beispielsweise um eine Naturkonstante oder um eine näherungsweise gleichbleibende Eigenschaft eines mittels des Feldgeräts untersuchten Mediums beziehungsweise Objekts handeln. Bei der Funktionseinheit oder Funktionsgruppe des Feldgeräts handelt es sich bevorzugt um eine CPU, einen Microcontroller, eine sonstige Rechnereinheit oder eine Gruppe von Rechen- und/oder Signalverarbeitungskomponenten. Die Funktionseinheit oder Funktionsgruppe kann, muss aber nicht Peripheriekomponenten umfassen, beispielsweise Analog-Digital-Wandler oder Digital-Analog-Wandler. Eine Funktionsgruppe des Feldgeräts kann insbesondere auch durch ein System-on-Chip implementiert sein. Die Funktionseinheit oder Funktionsgruppe kann erfindungsgemäß mit der Versorgungs-Zweileiterschnittstelle, der Zusatz-Schnittstelle und/oder dem integrierten Sensor direkt oder indirekt gekoppelt sein.

Es ist von Vorteil, wenn die die Funktionseinheit oder Funktionsgruppe zur Ausführung des nachfolgenden Schrittes eingerichtet ist: Veranlassung einer Übertragung des Ausgangssignals über das Zweileitersystem mittels der Versorgungs-Zweileiterschnittstelle. Auf diese Weise kann auf zusätzliche Schnittstellen zur Ausgabe des Ausgangssignals verzichtet werden und die vorhandene Versorgungs-Zweileiterschnittelle auch zur Signalübertragung genutzt werden.

Es ist vorteilhaft, wenn die Zusatz-Schnittstelle eine Zweileiterschnittstelle ist. Vorteile der Anbindung eines Feldgeräts über eine Zweileiterschnittstelle wurden eingangs bereits genannt. Das Feldgerät ist bevorzugt so eingerichtet, dass es über die Zusatz-Schnittstelle das mindestens eine zweite Eingangssignal erhalten kann. Es ist erfindungsgemäß auch möglich, dass das Feldgerät über die Zusatz-Schnittstelle Daten ausgeben kann, zum Beispiel zur Konfiguration eines Geräts, das über die Zusatz-Schnittstelle an das Feldgerät angeschlossen ist.

Die Zusatz-Schnittstelle ist vorzugsweise zur Abgabe von Energie geeignet. So kann ein an das Feldgerät angeschlossenes Gerät wie beispielsweise ein Sensor mit Spannung beziehungsweise Strom versorgt werden. Die dem angeschlossenen Gerät bereitgestellte Energie kann das Feldgerät gemäß einer Ausführungsform der Erfindung über die Versorgungs-Zweileiterschnittstelle erhalten. Alternativ oder zusätzlich kann das Feldgerät einen Energiespeicher wie eine Batterie oder dergleichen beinhalten, der zur Energieversorgung des angeschlossenen Geräts vorgesehen ist. Gemäß anderer Ausführungsformen ist das angeschlossene Gerät selbst mit einem Energiespeicher, der dem Feldgerät nicht zugehörig ist, entweder ausgestattet oder verbunden.

Die Versorgungs-Zweileiterschnittstelle und/oder die mindestens eine Zusatz-Schnittstelle sind bevorzugt zum Empfang und/oder Versand von Signalen gemäß dem Standard DIN IEC 60381-1, dem Standard DIN IEC 60381-2, dem Profibus-PA-Protokoll oder dem HART-Protokoll geeignet. Der Standard DIN IEC 60381-1 definiert die Übertragung von Daten über analoge Gleichstromsignale, die auch zur Energieversorgung genutzt werden. Insbesondere ist die Version DIN IEC 60381-1:1985-11 des Standards vorteilhaft. Der Standard DIN IEC 60381-2 definiert die Übertragung von Daten über analoge Spannungssignale. Insbesondere ist die Version DIN IEC 60381-21980-06 des Standards vorteilhaft. Bei Profibus (Process Field Bus) handelt es sich um ein Feldbusprotokoll. Das Profibus-PA-Protokoll erlaubt eine digitale Signalübertragung. Das HART-Protokoll setzt auf dem 4/20-mA-Standard auf und ist ebenfalls zur digitalen Signalübertragung geeignet. Gemäß anderer Varianten der Erfindung kann die Signal- und/oder Energieübertragung über die Versorgungs-Zweileiterschnittstelle jedoch auch gemäß sonstiger Standards oder Protokolle erfolgen.

In dem Feldgerät ist mehr als ein Berechnungsverfahren gespeichert, das zur Generierung des Ausgangssignals ausgeführt werden kann, wobei unterschiedliche Berechnungsverfahren für externe Signalerzeuger unterschiedlichen Typs, welche an die Zusatz-Schnittstelle angeschlossen sind, vorgesehen sind. Somit ist es möglich, nach Bedarf unterschiedliche externe Signalerzeuger an das Feldgerät anzuschließen und auf dieser Grundlage das Ausgangssignal zu generieren. Unter dem externen Signalerzeuger soll erfindungsgemäß ein externes Messgerät beziehungsweise ein externer Sensor verstanden werden, zum Beispiel auch ein anderes Feldgerät. Es kann darunter aber auch eine beliebige andere Vorrichtung verstanden werden, die einen Mess- beziehungsweise Datenwert liefert beziehungsweise ein verarbeitbares Signal erzeugt, das zur Generierung des Ausgangssignals verwendet werden kann. Der Signalerzeuger könnte gemäß einer Ausführungsform beispielsweise eine Regel- oder Steuereinheit eines Transportbands sein, das dem Feldgerät eine Bandlaufgeschwindigkeit des Transportbands zur Verfügung stellt.

Bevorzugt weist die Zusatz-Schnittstelle genau ein Anschlusspaar auf, wobei das Feldgerät dazu eingerichtet ist, das zweite Eingangssignal von dem Anschlusspaar abzugreifen. Das Feldgerät ist somit kompakt ausgeführt und an das Anschlusspaar können je nach Bedarf unterschiedliche externe Signalerzeuger angeschlossen werden. Das Anschlusspaar wird bevorzugt durch zwei Klemmen gebildet. Wie vorangehend ausgeführt kann das Feldgerät in Abhängigkeit des angeschlossenen externen Signalerzeugers unterschiedliche Berechnungsverfahren beziehungsweise Algorithmen zur Generierung des Ausgangssignals zur Anwendung bringen.

Es ist alternativ möglich, dass die Zusatz-Schnittstelle mehrere Anschlusspaare aufweist, wobei das Feldgerät dazu eingerichtet ist, das zweite Eingangssignal von einem der Anschlusspaare abzugreifen. Die Zusatz-Schnittstelle weist somit mehrere Anschlusspaare auf und je nach Bedarf kann das zweite Eingangssignal wahlweise von einem der Anschlusspaare abgegriffen werden. Das Feldgerät kann zu diesem Zweck beispielsweise einen Multiplexer aufweisen, oder die Funktionseinheit oder die Funktionsgruppe kann mehrere Eingänge aufweisen, deren Eingangssignale wahlweise verarbeiten werden können. Bei den Anschlusspaaren kann es sich erfindungsgemäß um Klemmenpaare handeln.

Es ist erfindungsgemäß möglich, dass das erste Eingangssignal eine Dichte wiedergibt. Eine Dichte kann mittels eines Dichtesensors gemessen werden, wie beispielsweise eines Biegeschwingers, der eine Eigenfrequenz eines zu untersuchenden Mediums ermittelt. Aus der Eigenfrequenz kann die Dichte des Mediums abgeleitet werden. Es können aber auch Dichtesensoren anderer Art verwendet werden. Um die Dichte korrekt zu bestimmen, ist es jedoch ergänzend bei vielen Messverfahren notwendig, die Temperatur des zu untersuchenden Mediums zu kennen.

Gemäß einer besonderen Ausführungsform gibt das zweite Eingangssignal einen Temperaturmesswert wieder, und die Funktionseinheit oder Funktionsgruppe ist dazu eingerichtet, bei der Generierung des Ausgangssignals eine Temperaturkompensation des ersten Eingangssignals mittels des zweiten Eingangssignals durchzuführen. Dies ist insbesondere dann vorteilhaft, falls das erste Eingangssignal eine Dichte wiedergibt. Aber auch bei der Bestimmung anderer Stoffeigenschaften kann es vorteilhaft sein, eine Temperaturkompensation durchzuführen. Das heißt, auch bei ersten Eingangssignalen anderer Art ist eine Temperaturkompensation mittels eines zweiten Eingangssignals, das einen Temperaturmesswert wiedergibt, von Vorteil.

Es ist vorteilhaft, wenn das erste Eingangssignal mindestens eine Dimension eines beobachteten Objekts wiedergibt oder aus dem ersten Eingangssignal die mindestens eine Dimension des Objekts ableitbar ist. Unter der Dimension des beobachteten Objekts soll dessen räumliche Ausdehnung verstanden werden, es kann es sich beispielsweise um dessen Höhe, Breite oder Tiefe handeln. Wird beispielsweise ein Schüttgut auf einem Transportband transportiert, dann kann bei einer Beobachtung von der Seite mittels eines optischen Sensors eine Höhe des Schüttguts bestimmt werden. Es ist auch möglich, dass aus dem Messwert eine Dimension des Objekts ableitbar ist. Beispielsweise kann aus Eingangssignalen, die eine optische Wiedergabe des beobachteten Objekts darstellen wie ein Kamerabild, mittels geeigneter Datenverarbeitungsschritte eine Höhe des Objekts abgeleitet werden. Es ist erfindungsgemäß möglich, dass entsprechende Auswertungsvorgänge und/oder Berechnungen von der Funktionseinheit oder Funktionsgruppe durchgeführt wird. Das Feldgerät ist also vorzugsweise dazu geeignet, die mindestens eine Dimension des Objekts aus dem mindestens einen ersten Eingangssignal abzuleiten.

Es ist besonders vorteilhaft, wenn das zweite Eingangssignal eine Durchflussgeschwindigkeit oder eine Transportgeschwindigkeit eines Materials wiedergibt, wobei die Funktionseinheit oder Funktionsgruppe dazu eingerichtet ist, als das Ausgangssignal eine Masse des Materials oder einen Massenstrom auf Grundlage des ersten Eingangssignals und des zweiten Eingangssignals zu bestimmen. Häufig soll eine transportierte Masse ermittelt werden. Es ist auch möglich, dass ein Massenstrom ermittelt werden soll, also die transportierte Masse pro Zeiteinheit. Dies kann allein aufgrund der Kenntnis einer Dichte des Materials oder der Höhe eines Objekts nicht ermittelt werden. Es ist ferner notwendig zu wissen, wie schnell das Material transportiert wird. Es kann sich bei dem Material beispielsweise um Schüttgut auf einem Fließband handeln, dessen Transportgeschwindigkeit zu ermitteln ist. Es kann sich alternativ um die Durchflussgeschwindigkeit eines Materials durch ein Rohr handeln. Um die Masse des Materials zu ermitteln, kann es gemäß Ausführungsformen in beiden Fällen notwendig sein, dass zur Berechnung einige Parameter vorbekannt sind oder abgeschätzt werden.

Betrachten wir den Fall, dass eine in einem Rohr transportierte Masse anhand einer gemessenen Dichte und anhand einer Durchflussgeschwindigkeit abgeschätzt wird. In diesem Fall soll eine Querschnittsfläche A des Rohrs vorbekannt sein. Der Massenstrom *qₘ* ergibt sich dann bei einer Durchflussgeschwindigkeit *v* und einer Dichte ρ zu *qₘ =* ρ ** A * v.* In dem Fall, dass Schüttgut auf einem Transportband transportiert wird und dessen Höhe h gemessen wird, dann muss dessen durchschnittliche Ausdehnung in Breitenrichtung w auf dem Fließband sowie dessen durchschnittliche Dichte *ρ* vorab abgeschätzt werden. Wenn eine Transportgeschwindigkeit v dem Feldgerät als ein zweites Eingangssignal bereitgestellt wird, dann kann ein Massenstrom *qₘ* berechnet werden gemäß *qₘ =* ρ ** w * h * v.* Eine Ermittlung der transportierten Masse erfolgt in beiden Fällen durch Integration des Massenstroms über die Zeit. Bei anderen Ausführungsformen der Erfindung können hingegen andere Parameter vorbekannt sein, oder es ist auch möglich, dass zusätzliche Parameter von externen Signalerzeugern geliefert werden und zusätzlich zur Generierung des Ausgangssignals herangezogen.

Gemäß einem weiteren Aspekt der Erfindung wird eine Messanordnung vorgeschlagen, mit einem Feldgerät vorangehend beschriebener Art und mit einem Signalerzeuger, wobei das Feldgerät über die Zusatz-Schnittstelle des Feldgeräts mit dem Signalerzeuger verbunden ist. Unter dem Signalerzeuger soll jegliche Gerätschaft verstanden werden, die dem Feldgerät ein Signal liefern kann, zum Beispiel ein Sensor oder eine Steuereinheit. Der Signalerzeuger erzeugt bevorzugt das zweite Eingangssignal, das von dem Feldgerät ausgewertet wird. Der Signalerzeuger ist vorzugsweise über ein Zweileitersystem an das Feldgerät angebunden. Der Signalerzeuger ist bevorzugt nicht Teil des Feldgeräts und/oder der Signalerzeuger ist bevorzugt außerhalb eines Gehäuses des Feldgeräts angeordnet.

Gemäß einer möglichen Ausführungsform der Erfindung ist der Signalerzeuger ein Temperatursensor. Insbesondere kann es sich bei dem Temperatursensor um einen RTD-Sensor handeln. Mit Hilfe des Temperatursensors kann eine Temperaturkorrektur eines dem ersten Eingangssignal zugrundeliegenden Werts erfolgen, den das Feldgerät mittels seines integrierten Sensors ermittelt. Ein temperaturkorrigiertes Ausgangssignal kann somit von dem Feldgerät erzeugt werden.

Es ist vorteilhaft, wenn der Signalerzeuger ein Durchflusssensor oder eine Steuervorrichtung eines Transportsystems ist. Bei einer entsprechenden Ausführungsform ist der Signalerzeuger dazu geeignet, zu messen beziehungsweise anzugeben, wie schnell beispielsweise eine Flüssigkeit durch ein Rohr fließt oder wie schnell ein Schüttgut von einem Transportband transportiert wird. Wenn der integrierte Sensor der Messanordnung eine Dichte ermittelt oder mindestens eine Dimension eines beobachteten Objekts ermittelt, dann lässt sich auf dieser Grundlage ein Massenstrom in dem Rohr bzw. auf dem Transportband berechnen.

Gemäß einem weiteren Aspekt der Erfindung wird ein Verfahren zur Bereitstellung eines Ausgangssignals vorgeschlagen, mit den Schritten: Erzeugung mindestens eines ersten Eingangssignals durch einen integrierten Sensor eines Feldgeräts, Erhalt mindestens eines zweiten Eingangssignals durch das Feldgerät von einem zu dem Feldgerät externen Signalerzeuger, Generierung des Ausgangssignals durch das Feldgerät auf Grundlage des mindestens einen ersten Eingangssignals sowie des mindestens einen zweiten Eingangssignals und Veranlassung einer Übertragung des Ausgangssignals über ein Zweileitersystem mittels einer Versorgungs-Zweileiterschnittstelle des Feldgeräts. Erfindungsgemäß wird zur Generierung des Ausgangssignals eines von mehreren Berechnungsverfahren ausgeführt, die in dem Feldgerät gespeichert sind, wobei unterschiedliche Berechnungsverfahren für externe Signalerzeuger unterschiedlichen Typs vorgesehen sind. Erfindungsgemäß kann der externe Signalerzeuger das mindestens eine zweite Eingangssignal generieren. Es versteht sich, dass zur Generierung des Ausgangssignals das vorhergehend beschriebene Feldgerät beziehungsweise die vorhergehend beschriebene Messanordnung verwendet werden kann. Das Verfahren ist aber nicht auf die Implementierung mit Hilfe eines solchen Feldgeräts beziehungsweise einer solchen Messanordnung beschränkt.

Eine Variante des Verfahrens ist besonders vorteilhaft, bei der das mindestens eine erste Eingangssignal eine Dichte wiedergibt und das mindestens eine zweite Eingangssignal eine Temperatur wiedergibt, und wobei bei der Generierung des Ausgangssignals eine Temperaturkompensation des mindestens einen ersten Eingangssignals mit Hilfe des mindestens einen zweiten Eingangssignals vorgenommen wird. Das Ausgangssignal ist somit eine kompensierte Dichte. Gemäß einer weiteren vorteilhaften Ausführungsform gibt das mindestens eine erste Eingangssignal eine Dichte wieder und das mindestens eine zweite Eingangssignal gibt eine Durchflussgeschwindigkeit oder eine Transportgeschwindigkeit eines Materials wieder, wobei bei der Generierung des Ausgangssignals eine Masse oder ein Massenstrom des Materials bestimmt wird. Gemäß einer weiteren vorteilhaften Ausführungsform gibt das mindestens eine erste Eingangssignal mindestens eine Dimension eines Objekts wieder oder aus dem mindestens einen ersten Eingangssignal ist die mindestens eine Dimension des Objekts ableitbar, und das mindestens eine zweite Eingangssignal ist eine Durchflussgeschwindigkeit oder eine Transportgeschwindigkeit des Objekts, wobei bei der Generierung des Ausgangssignals eine Masse oder ein Massenstrom des Objekts bestimmt wird. Um die Masse oder den Massenstrom des Materials beziehungsweise des Objekts zu bestimmen, sind gegebenenfalls zusätzliche Parameter oder Eingabewerte notwendig. Diese Werte können gemäß Ausführungsformen der Erfindung vorab festgelegt oder bestimmt sein. Gemäß anderen Ausführungsformen der Erfindung können diese Werte bei der Durchführung des Verfahrens mittels zusätzlicher Messewerterzeuger erzeugt werden und dem Feldgerät bereitgestellt werden, sodass diese Werte bei der Generierung des Ausgangssignals berücksichtigt können.

Die Zeichnungen stellen vorteilhafte Ausführungsformen der Erfindung dar. Dabei zeigt:
Fig. 1 eine schematische Darstellung eines erfindungsgemäßen Feldgeräts in einer Innenansicht,
Fig. 2 eine schematische Darstellung eines ersten Anwendungsszenarios mit einer ersten Messanordnung,
Fig. 3 einen Verbindungsplan der ersten Messanordnung,
Fig. 4 eine schematische Darstellung eines zweiten Anwendungsszenarios mit einer zweiten Messanordnung
Fig. 5 einen Verbindungsplan der zweiten Messanordnung,
Fig. 6 eine schematische Darstellung eines dritten Anwendungsszenarios mit einer dritten Messanordnung und
Fig. 7 ein Flussdiagramm des erfindungsgemäßen Verfahrens.

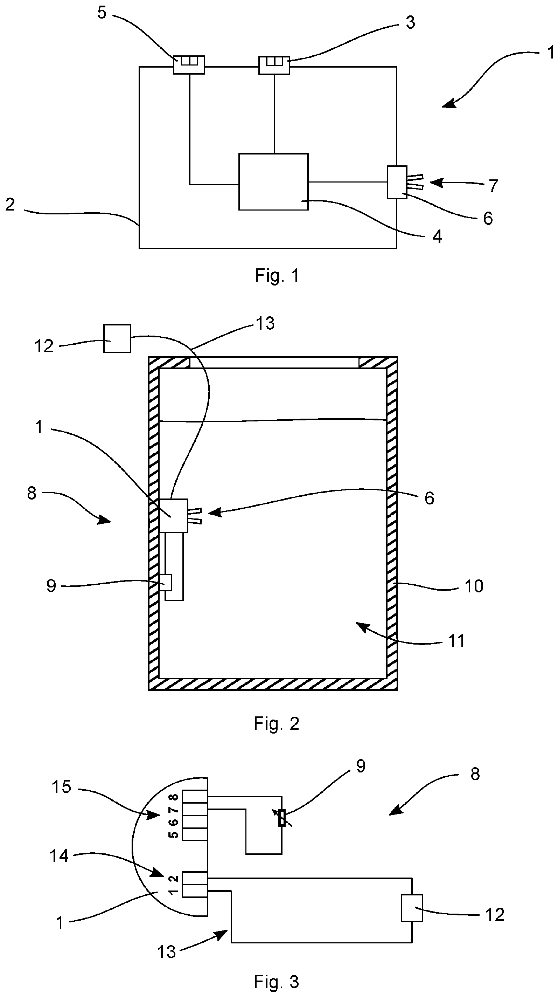

Fig. 1 zeigt eine schematische Darstellung eines erfindungsgemäßen Feldgeräts 1 in einer Innenansicht. Das Feldgerät 1 weist ein Gehäuse 2 auf. Es ist mit einer Versorgungs-Zweileiterschnittstelle 3 ausgestattet. Über die Versorgungs-Zweileiterschnittstelle 3 kann das Feldgerät 1 von einer übergeordneten Einheit mit elektrischer Energie versorgt werden und das Feldgerät 1 kann ein Ausgangssignal über die Versorgungs-Zweileiterschnittstelle 3 an die übergeordnete Einheit ausgeben. Dies erfolgt nach dem Standard DIN IEC 60381-1. Das Feldgerät 1 weist eine Funktionseinheit 4 auf, bei der es sich um einen Microcontroller handelt. Der Microcontroller ist mit der Versorgungs-Zweileiterschnittstelle 3 und mit einer Zusatz-Schnittstelle 5 des Feldgeräts 1 verbunden. Die Zusatz-Schnittstelle 5 ist dazu vorgesehen, eine Verbindung mit einem Temperatursensor herzustellen.

Das Feldgerät 1 weist ferner einen integrierten Sensor 6 auf, bei dem es sich um einen Dichtesensor handelt, der nach dem Biegeschwinger-Prinzip arbeitet. Dabei wird eine Schwinggabel 7 des integrierten Sensors 6 angeregt und auf diese Weise eine Eigenfrequenz eines umgebenden Mediums ermittelt. Auf diese Weise lässt sich die Dichte des umgebenden Mediums bestimmen. Die Funktionseinheit 4 ist auch mit dem integrierten Sensor 6 verbunden. Beim Betrieb des Feldgeräts 1 erhält die Funktionseinheit 4 ein erstes Eingangssignal von dem integrierten Sensor 6 und ein zweites Eingangssignal über die Zusatz-Schnittstelle 5. Sie generiert ein Ausgangssignal auf Grundlage des ersten Eingangssignals sowie des zweiten Eingangssignals und veranlasst anschließend eine Übertragung des Ausgangssignals mittels der Versorgungs-Zweileiterschnittstelle 3. Bei dem ersten Eingangssignal handelt es sich um eine Dichte des umgebenden Mediums, die mittels des zweiten Eingangssignals, bei dem es sich um eine Temperatur des umgebenden Mediums handelt, temperaturkompensiert wird. Somit lässt sich eine temperaturkompensierte Dichte ermitteln und über die Versorgungs-Zweileiterschnittstelle 3 des Feldgeräts 1 ausgeben.

Fig. 2 zeigt eine schematische Darstellung eines ersten Anwendungsszenarios mit einer ersten Messanordnung 8. Die erste Messanordnung 8 weist ein Feldgerät 1 auf, dessen integrierter Sensor 6 ein Dichtesensor ist. An eine Zusatz-Schnittstelle des Feldgeräts 1 ist ein Temperatursensor 9 angeschlossen. Sowohl das Feldgerät 1 als auch der Temperatursensor 9 sind in einem Behältnis 10 angeordnet, in dem sich ein Medium 11 befindet. Eine übergeordnete Einheit 12, bei der es sich um ein Kontroll-und Versorgungssystem handelt, ist an das Feldgerät 1 über ein Zweileitersystem 13 angeschlossen (hier beide Leiter des Zweileitersystems 13 gemeinsam geführt), wobei die übergeordnete Einheit 12 das Feldgerät 1 über das Zweileitersystem 13 mit elektrischer Energie versorgt. Zur Bestimmung der Dichte des Mediums 11 führt das Feldgerät 1 eine Dichtemessung mittels des integrierten Sensors 6 und eine Temperaturmessung mittels des Temperatursensors 9 durch. Das Feldgerät 1 führt eine Temperaturkompensation eines Ergebnisses der Dichtemessung mittels einer gemessenen Temperatur des Mediums durch. Eine sich dabei ergebende kompensierte Dichte wird als ein Ausgangssignal mittels einer Versorgungs-Zweileiterschnittstelle des Feldgeräts 1 über das Zweileitersystem 13 an die übergeordnete Einheit 12 übermittelt.

Fig. 3 zeigt einen Verbindungsplan der ersten Messanordnung 8. Das Feldgerät 1 weist erste Klemmen 14 auf, über die es über das Zweileitersystem 13 an die übergeordnete Einheit 12 angeschlossen ist. Sowohl die Kommunikation als auch die Energieversorgung des Feldgeräts 1 über das Zweileitersystem 13 erfolgt gemäß dem Standard DIN IEC 60381-1. Das Feldgerät 1 weist ferner zweite Klemmen 15 auf, an welche der Temperatursensor 9 angeschlossen ist. Bei dem Temperatursensor 9 handelt es sich um einen RTD-Sensor. Es wird ein temperaturabhängiger Widerstand in dem RTD-Sensor gemessen, indem das Feldgerät 1 einen definierten Messstrom in den Temperatursensor 9 schickt und intern einen Spannungsabfall an dem RTD-Sensor ermittelt. Auf Grundlage der Spannung lässt sich indirekt eine Temperatur des Mediums bestimmen, sodass die vorhergehend beschriebene Temperaturkompensation erfolgen kann. Eine durch den integrierten Sensor ermittelte Dichte stellt ein erstes Eingangssignal dar und der Spannungsabfall an dem RTD-Sensor stellt ein zweites Eingangssignal dar. Das Ausgangssignal wird auf Grundlage des ersten Eingangssignals und des zweiten Eingangssignals ermittelt.

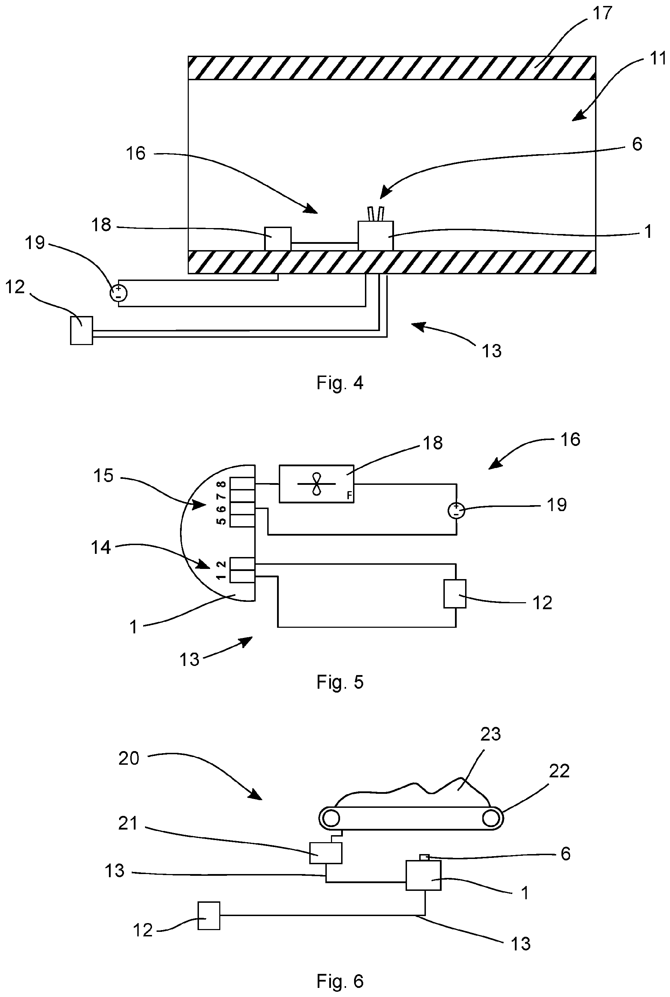

Fig. 4 zeigt eine schematische Darstellung eines zweiten Anwendungsszenarios mit einer zweiten Messanordnung 16. Bei der zweiten Messanordnung 16 sind in einem Rohr 17, das von einem Medium 11 durchflossen ist, ein Feldgerät 1 und ein Durchflusssensor 18 angeordnet. Der Durchflusssensor 18 ist an eine Zusatz-Schnittstelle des Feldgeräts 1 angeschlossen und in Reihe mit einer Spannungsquelle 19 geschaltet. Die Spannungsquelle 19 ist außerhalb des Rohrs 17 angeordnet. Das Feldgerät 1 weist einen integrierten Sensor 6 auf, bei dem es sich um einen Dichtesensor handelt. Der integrierte Sensor 6 bestimmt eine Dichte des Mediums 1 als ein erstes Eingangssignal. Der Durchflusssensor 18 bestimmt eine Durchflussgeschwindigkeit des Mediums 11 als ein zweites Eingangssignal. Da eine Querschnittsfläche des Rohrs 17 bekannt ist, kann eine Rechnereinheit des Feldgeräts 1 aus dem ersten Eingangssignal und dem zweiten Eingangssignal einen Massenstrom in dem Rohr berechnen. Eine übergeordnete Einheit 12 ist mit dem Feldgerät 1 über ein Zweileitersystem 13 kommunikativ verbunden, sodass das Feldgerät 1 den Massenstrom an die übergeordnete Einheit in Form eines Ausgangssignals übertragen kann. Der Anschluss des Zweileitersystems 13 an dem Feldgerät 1 erfolgt über eine Versorgungs-Zweileiterschnittstelle. Außerdem versorgt die übergeordnete Einheit 12 das Feldgerät 1 über das Zweileitersystem 13 mit elektrischer Energie.

Fig. 5 zeigt einen Verbindungsplan der zweiten Messanordnung 16. Das Feldgerät 1 weist erste Klemmen 14 auf, über die das Feldgerät 1 an die übergeordnete Einheit 12 angeschlossen ist. Eine Kommunikation über das Zweileitersystem 13 erfolgt gemäß dem Standard DIN IEC 60381-1. Das Feldgerät 1 weist ferner zweite Klemmen 15 auf, an welche der Durchflusssensor 18 angeschlossen ist. Die mit dem Durchflusssensor 18 in Reihe geschaltete Spannungsquelle 19 versorgt den Durchflusssensor 18 mit einer für diesen notwendigen Betriebsspannung. Die zweiten Klemmen 15 werden als ein passiver Stromeingang betrieben. Der integrierte Sensor des Feldgeräts 1 wird aber nicht von der Spannungsquelle 19 versorgt, seine Energieversorgung erfolgt ausschließlich über das Zweileitersystem 13 durch die übergeordnete Einheit 12.

Fig. 6 zeigt eine schematische Darstellung eines dritten Anwendungsszenarios mit einer dritten Messanordnung 20. Ein Feldgerät 1 ist über ein erstes Zweileitersystem 13 an eine übergeordnete Einheit 12 angeschlossen, die das Feldgerät 1 mit elektrischer Energie versorgt. Das Feldgerät 1 ist über ein zweites Zweileitersystem 13 an eine Steuervorrichtung 21 eines Transportbands 22 angeschlossen. Die Verbindung über beide Zweileitersysteme 13 erfolgt gemäß dem Standard DIN IEC 60381-1. Das Feldgerät 1 weist einen integrierten Sensor 6 auf, bei dem es sich um eine Kamera handelt. Ein Microcontroller innerhalb des Feldgeräts 1 erhält von dem integrierten Sensor 6 erste Eingangssignale, die Bilder von Schüttgut 23 auf dem Transportband 22 wiedergeben. Die Steuervorrichtung 21 kennt eine Bandlaufgeschwindigkeit des Transportbands 22 und übermittelt diese an das Feldgerät 1. Die Bandlaufgeschwindigkeit geht in Form von zweiten Eingangssignalen bei dem Microcontroller ein. Der Microcontroller leitet aus den ersten Eingangssignalen eine jeweilige Höhe des Schüttguts 23 ab. Auf Grundlage der Bandgeschwindigkeit, einer angenommenen durchschnittlichen Dichte des Schüttguts sowie einer angenommenen durchschnittlichen Ausdehnung des Schüttguts 23 in der Breite berechnet der Microcontroller eine von dem Transportband 22 beförderte Masse und gibt diese in Form eines Ausgangssignals über das erste Zweileitersystem 13 an die übergeordnete Einheit 12 aus.

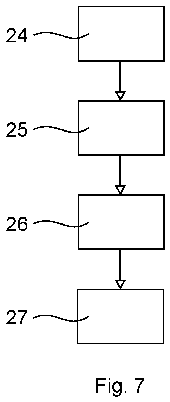

Fig. 7 zeigt ein Flussdiagramm des erfindungsgemäßen Verfahrens. In einem Messschritt 24 erzeugt ein integrierter Sensor eines Feldgeräts ein erstes Eingangssignal bei einer Messung, zum Beispiel bei einer Messung einer Dichte. In einem Empfangsschritt 25 erhält das Feldgerät ein zweites Eingangssignal von einem zu dem Feldgerät externen Signalerzeuger. Bei dem externen Signalerzeuger kann es sich zum Beispiel um einen externen Sensor handeln. In einem Generierungsschritt 26 generiert das Feldgerät ein Ausgangssignal auf Grundlage des ersten Eingangssignals sowie des zweiten Eingangssignals. Der Generierungsschritt kann erfindungsgemäß von einem Microcontroller oder einer sonstigen Funktionseinheit oder Funktionsgruppe zur Daten- und/oder Signalverarbeitung des Feldgeräts vorgenommen werden. In einem Ausgangsschritt 27 überträgt das Feldgerät das Ausgangssignal über ein Zweileitersystem mittels einer Versorgungs-Zweileiterschnittstelle des Feldgeräts. Eine übergeordnete Einheit wie beispielsweise ein Kontrollrechner kann das Ausgangssignal über die Zweileiterschnittstelle empfangen.

### Bezugszeichenliste

- 1: Feldgerät
- 2: Gehäuse
- 3: Versorgungs-Zweileiterschnittstelle
- 4: Funktionseinheit
- 5: Zusatz-Schnittstelle
- 6: Integrierter Sensor
- 7: Schwinggabel
- 8: Erste Messanordnung
- 9: Temperatursensor

- 10: Behältnis
- 11: Medium
- 12: Übergeordnete Einheit
- 13: Zweileitersystem
- 14: Erste Klemmen
- 15: Zweite Klemmen
- 16: Zweite Messanordnung
- 17: Rohr
- 18: Durchflusssensor
- 19: Spannungsquelle

- 20: Dritte Messanordnung
- 21: Steuervorrichtung
- 22: Transportband
- 23: Schüttgut
- 24: Messschritt
- 25: Empfangsschritt
- 26: Generierungsschritt
- 27: Ausgabeschritt

## Patentansprüche

1. Feldgerät (1) mit einer Versorgungs-Zweileiterschnittstelle (3), die zur Aufnahme von Energie über ein Zweileitersystem (13) und zur Signalübertragung über das Zweileitersystem (13) geeignet ist, mit einem integrierten Sensor (6), mit mindestens einer Zusatz-Schnittstelle (5), die zum Signalempfang geeignet ist, und mit einer Funktionseinheit (4) oder Funktionsgruppe zur Daten- und/oder Signalverarbeitung, die mit der Versorgungs-Zweileiterschnittstelle (3), der Zusatz-Schnittstelle (5) und dem integrierten Sensor (6) gekoppelt ist, wobei die Funktionseinheit (4) oder Funktionsgruppe zur Ausführung der nachfolgenden Schritte eingerichtet ist:
Erhalt mindestens eines ersten Eingangssignals von dem integrierten Sensor (6),
Erhalt mindestens eines zweiten Eingangssignals von der Zusatz-Schnittstelle (5), und
Generierung eines Ausgangssignals auf Grundlage des mindestens einen ersten Eingangssignals sowie des mindestens einen zweiten Eingangssignals,
**dadurch gekennzeichnet, dass**
in dem Feldgerät (1) mehr als ein Berechnungsverfahren gespeichert ist, das zur Generierung des Ausgangssignals ausgeführt werden kann, wobei unterschiedliche Berechnungsverfahren für externe Signalerzeuger unterschiedlichen Typs, welche an die Zusatz-Schnittstelle (5) angeschlossen sind, vorgesehen sind.

2. Feldgerät (1) nach Anspruch 1,
**dadurch gekennzeichnet, dass**
die Funktionseinheit (4) oder Funktionsgruppe zur Ausführung des nachfolgenden Schrittes eingerichtet ist:
Veranlassung einer Übertragung des Ausgangssignals über das Zweileitersystem (13) mittels der Versorgungs-Zweileiterschnittstelle (3).

3. Feldgerät (1) nach einem der vorhergehenden Ansprüche,
**dadurch gekennzeichnet, dass**
die Zusatz-Schnittstelle (5) eine Zweileiterschnittstelle ist.

4. Feldgerät (1) nach einem der vorhergehenden Ansprüche,
**dadurch gekennzeichnet, dass**
die Zusatz-Schnittstelle (5) zur Abgabe von Energie geeignet ist.

5. Feldgerät (1) nach einem der vorhergehenden Ansprüche,
**dadurch gekennzeichnet, dass**
die Versorgungs-Zweileiterschnittstelle (3) und/oder die mindestens eine Zusatz-Schnittstelle (5) zum Empfang und/oder zum Versand von Signalen gemäß dem Standard DIN IEC 60381-1, dem Standard DIN IEC 60381-2, dem Profibus-PA-Protokoll und/oder dem HART-Protokoll geeignet ist.

6. Feldgerät (1) nach einem der vorhergehenden Ansprüche,
**dadurch gekennzeichnet, dass**
die Zusatz-Schnittstelle (5) genau ein Anschlusspaar aufweist, wobei das Feldgerät (1) dazu eingerichtet ist, das zweite Eingangssignal von dem Anschlusspaar abzugreifen.

7. Feldgerät (1) nach einem der Ansprüche 1 bis 5,
**dadurch gekennzeichnet, dass**
die Zusatz-Schnittstelle (5) mehrere Anschlusspaare aufweist, wobei das Feldgerät (1) dazu eingerichtet ist, das zweite Eingangssignal von einem der Anschlusspaare abzugreifen.

8. Feldgerät (1) nach einem der vorhergehenden Ansprüche,
**dadurch gekennzeichnet, dass**
das erste Eingangssignal eine Dichte wiedergibt.

9. Feldgerät (1) nach einem der vorhergehenden Ansprüche,
**dadurch gekennzeichnet, dass**
das zweite Eingangssignal einen Temperaturmesswert wiedergibt, wobei die Funktionseinheit (4) oder Funktionsgruppe dazu eingerichtet ist, bei der Generierung des Ausgangssignals eine Temperaturkompensation des ersten Eingangssignals mittels des zweiten Eingangssignals durchzuführen.

10. Feldgerät (1) nach einem der Ansprüche 1 bis 7,
**dadurch gekennzeichnet, dass**
das erste Eingangssignal mindestens eine Dimension eines beobachteten Objekts wiedergibt oder aus dem ersten Eingangssignal die mindestens eine Dimension des beobachteten Objekts ableitbar ist.

11. Feldgerät (1) nach Anspruch 8 oder Anspruch 10,
**dadurch gekennzeichnet, dass**
das zweite Eingangssignal eine Durchflussgeschwindigkeit oder eine Transportgeschwindigkeit eines Materials wiedergibt, wobei die Funktionseinheit (4) oder Funktionsgruppe dazu eingerichtet ist, als das Ausgangssignal eine Masse des Materials oder einen Massenstrom auf Grundlage des ersten Eingangssignals und des zweiten Eingangssignals zu bestimmen.

12. Messanordnung (8, 16, 20) mit einem Feldgerät (1) und mit einem Signalerzeuger, wobei das Feldgerät (1) über eine Zusatz-Schnittstelle (5) mit dem Signalerzeuger verbunden ist,
**dadurch gekennzeichnet, dass**
das Feldgerät (1) nach einem der Ansprüche 1 bis 8 ausgebildet ist.

13. Messanordnung (8, 16, 20) nach Anspruch 12,
**dadurch gekennzeichnet, dass**
das Feldgerät (1) nach Anspruch 9 ausgebildet ist und der Signalerzeuger ein Temperatursensor (9) ist.

14. Messanordnung (8, 16, 20) nach Anspruch 12,
**dadurch gekennzeichnet, dass**
das Feldgerät (1) nach Anspruch 11 ausgebildet ist und der Signalerzeuger ein Durchflusssensor (18) oder eine Steuervorrichtung (21) eines Transportsystems ist.

15. Verfahren zur Bereitstellung eines Ausgangssignals mit den Schritten:
- Erzeugung mindestens eines ersten Eingangssignals durch einen integrierten Sensor (6) eines Feldgeräts (1),
- Erhalt mindestens eines zweiten Eingangssignals durch das Feldgerät (1) von einem zu dem Feldgerät (1) externen Signalerzeuger,
- Generierung des Ausgangssignals durch das Feldgerät (1) auf Grundlage des mindestens einen ersten Eingangssignals sowie des mindestens einen zweiten Eingangssignals und
- Veranlassung einer Übertragung des Ausgangssignals über ein Zweileitersystem (13) mittels einer Versorgungs-Zweileiterschnittstelle (3) des Feldgeräts (1),
**dadurch gekennzeichnet, dass**
zur Generierung des Ausgangssignals eines von mehreren Berechnungsverfahren ausgeführt wird, die in dem Feldgerät (1) gespeichert sind, wobei unterschiedliche Berechnungsverfahren für externe Signalerzeuger unterschiedlichen Typs vorgesehen sind.

## Claims

1. A field device (1) with a two-wire supply interface (3) which is suitable for receiving energy via a two-wire system (13) and for signal transmission via the two-wire system (13), with an integrated sensor (6), with at least one additional interface (5) which is suitable for signal reception, and with a functional unit (4) or functional group for data and/or signal processing, which is coupled to the two-wire supply interface (3), the additional interface (5) and the integrated sensor (6), the functional unit (4) or functional group is configured for carrying out the following steps:
receiving at least one first input signal from the integrated sensor (6),
receiving at least one second input signal from the additional interface (5), and
generating an output signal on the basis of the at least one first input signal and the at least one second input signal,
**characterized in that**
more than one computing method is stored in the field device (1), which can be executed to generate the output signal, different computing methods are provided for external signal generators of different types connected to the additional interface (5).

2. The field device (1) according to claim 1,
**characterized in that**
the functional unit (4) or functional group is configured for carrying out the following step:
causing a transmission of the output signal via the two-wire system (13) by means of the two-wire supply interface (3).

3. The field device (1) according to any of the preceding claims,
**characterized in that**
the additional interface (5) is a two-wire interface.

4. The field device (1) according to any of the preceding claims,
**characterized in that**
the additional interface (5) is suitable for supplying energy.

5. The field device (1) according to any of the preceding claims,
**characterized in that**
the two-wire supply interface (3) and/or the at least one additional interface (5) is suitable for receiving and/or transmitting signals in accordance with the DIN IEC 60381-1 standard, the DIN IEC 60381-2 standard, the Profibus PA protocol and/or the HART protocol.

6. The field device (1) according to any one of the preceding claims,
**characterized in that**
the additional interface (5) has exactly one pair of terminals, wherein the field device (1) is configured for tapping the second input signal from the pair of terminals.

7. The field device (1) according to one of claims 1 to 6,
**characterized in that**
the additional interface (5) has several pairs of terminals, wherein the field device (1) is configured for tapping the second input signal from one of the pairs of terminals.

8. The field device (1) according to any of the preceding claims,
**characterized in that**
the first input signal represents a density.

9. The field device (1) according to any of the preceding claims,
**characterized in that**
the second input signal represents a temperature measurement value, wherein the functional unit (4) or functional group is configured for carrying out a temperature compensation of the first input signal by means of the second input signal during the generation of the output signal.

10. The field device (1) according to one of claims 1 to 7,
**characterized in that**
the first input signal represents at least one dimension of an observed object, or the at least one dimension of the observed object can be derived from the first input signal.

11. The field device (1) according to claim 8 or claim 10,
**characterized in that**
the second input signal represents a flow velocity or transport velocity of a material, wherein the functional unit (4) or functional group is configured for determining as the output signal a mass of the material or a mass flow, based on the first input signal and the second output signal.

12. A measuring assembly (8, 16, 20) with a field device (1) and with a signal generator, the field device (1) being connected to the signal generator via an additional interface (5),
**characterized in that**
the field device (1) is designed according to one of claims 1 to 8.

13. The measuring assembly (8, 16, 20) according to claim 12,
**characterized in that**
the field device (1) is designed according to claim 9 and the signal generator is a temperature sensor (9).

14. The measuring assembly (8, 16, 20) according to claim 12,
**characterized in that**
the field device (1) is designed according to claim 11 and the signal generator is a flow sensor (18) or a control device (21) of a transport system.

15. A method of providing an output signal comprising the steps of:
- Generation of at least one first input signal by an integrated sensor (6) of a field device (1),
- receiving at least one second input signal by the field device (1) from a signal generator external to the field device (1),
- generating the output signal by the field device (1) on the basis of the at least one first input signal and the at least one second input signal, and
- causing a transmission of the output signal via a two-wire system (13) by means of a two-wire supply interface (3) of the field device (1),
**characterized in that**
one of several computing methods stored in the field device (1) is carried out to generate the output signal, different computing methods being provided for external signal generators of different types.

## Revendications

1. Appareil de terrain (1) avec une interface d'alimentation à deux conducteurs (3), qui est adaptée à la réception d'énergie par l'intermédiaire d'un système à deux conducteurs (13) et à la transmission de signaux par l'intermédiaire du système à deux conducteurs (13), avec un capteur intégré (6), avec au moins une interface supplémentaire (5) qui est adaptée à la réception de signaux et avec une unité fonctionnelle (4) ou un groupe fonctionnel de traitement de données et/ou de signaux qui est couplé à l'interface d'alimentation à deux conducteurs (3), à l'interface supplémentaire (5) et au capteur intégré (6), dans lequel l'unité fonctionnelle (4) ou le groupe fonctionnel est conçu(e) pour mettre en œuvre les étapes suivantes :
réception d'au moins un premier signal d'entrée en provenance du capteur intégré (6),
réception d'au moins un deuxième signal d'entrée en provenance de l'interface supplémentaire (5), et
génération d'un signal de sortie sur la base dudit au moins un premier signal d'entrée ainsi que dudit au moins un deuxième signal d'entrée,
**caractérisé en ce que**
plus d'un procédé de calcul qui peut être exécuté pour générer le signal de sortie est mémorisé dans l'appareil de terrain (1), dans lequel différents procédés de calcul sont prévus pour des générateurs de signaux externes de différents types qui sont connectés à l'interface supplémentaire (5).

2. Appareil de terrain (1) selon la revendication 1,
**caractérisé en ce que**
l'unité fonctionnelle (4) ou le groupe fonctionnel est conçu(e) pour mettre en œuvre l'étape suivante :
déclenchement d'une transmission du signal de sortie par l'intermédiaire du système à deux conducteurs (13) au moyen de l'interface d'alimentation à deux conducteurs (3).

3. Appareil de terrain (1) selon l'une quelconque des revendications précédentes,
**caractérisé en ce que**
l'interface supplémentaire (5) est une interface à deux conducteurs.

4. Appareil de terrain (1) selon l'une quelconque des revendications précédentes,
**caractérisé en ce que**
l'interface supplémentaire (5) est adaptée pour délivrer de l'énergie.

5. Appareil de terrain (1) selon l'une quelconque des revendications précédentes,
**caractérisé en ce que**
l'interface d'alimentation à deux conducteurs (3) et/ou l'au moins une interface supplémentaire (5) sont adaptées à la réception et/ou à l'envoi de signaux conformément à la norme DIN IEC 60381-1, à la norme DIN IEC 60381-2, au protocole Profibus PA et/ou au protocole HART.

6. Appareil de terrain (1) selon l'une quelconque des revendications précédentes,
**caractérisé en ce que**
l'interface supplémentaire (5) présente exactement une paire de bornes, dans lequel l'appareil de terrain (1) est conçu pour prélever le deuxième signal d'entrée de la paire de bornes.

7. Appareil de terrain (1) selon l'une quelconque des revendications 1 à 5,
**caractérisé en ce que**
l'interface supplémentaire (5) présente plusieurs paires de bornes, dans lequel l'appareil de terrain (1) est conçu pour prélever le deuxième signal d'entrée d'une des paires de bornes.

8. Appareil de terrain (1) selon l'une quelconque des revendications précédentes,
**caractérisé en ce que**
le premier signal d'entrée reflète une densité.

9. Appareil de terrain (1) selon l'une quelconque des revendications précédentes,
**caractérisé en ce que**
le deuxième signal d'entrée reflète une valeur de mesure de température, dans lequel l'unité fonctionnelle (4) ou le groupe fonctionnel est conçu(e) pour mettre en œuvre une compensation de température du premier signal d'entrée au moyen du deuxième signal d'entrée lors de la génération du signal de sortie.

10. Appareil de terrain (1) selon l'une quelconque des revendications 1 à 7,
**caractérisé en ce que**
le premier signal d'entrée reflète au moins une dimension d'un objet observé ou l'au moins une dimension de l'objet observé peut être déduite du premier signal d'entrée.

11. Appareil de terrain (1) selon la revendication 8 ou la revendication 10,
**caractérisé en ce que**
le deuxième signal d'entrée reflète une vitesse d'écoulement ou une vitesse de transport d'un matériau, dans lequel l'unité fonctionnelle (4) ou le groupe fonctionnel est conçu(e) pour définir, en tant que signal de sortie, une masse du matériau ou un débit massique sur la base du premier signal d'entrée et du deuxième signal d'entrée.

12. Agencement de mesure (8, 16, 20) comprenant un appareil de terrain (1) et avec un générateur de signaux, dans lequel l'appareil de terrain (1) est relié au générateur de signaux par une interface supplémentaire (5),
**caractérisé en ce que**
l'appareil de terrain (1) est réalisé selon l'une des revendications 1 à 8.

13. Agencement de mesure (8, 16, 20) selon la revendication 12,
**caractérisé en ce que**
l'appareil de terrain (1) est réalisé selon la revendication 9 et le générateur de signaux est un capteur de température (9).

14. Agencement de mesure (8, 16, 20) selon la revendication 12,
**caractérisé en ce que**
l'appareil de terrain (1) est réalisé selon la revendication 11 et le générateur de signaux est un capteur de débit (18) ou un dispositif de commande (21) d'un système de transport.

15. Procédé pour fournir un signal de sortie comprenant les étapes suivantes :
- génération d'au moins un premier signal d'entrée par un capteur intégré (6) d'un appareil de terrain (1),
- réception par l'appareil de terrain (1) d'au moins un deuxième signal d'entrée provenant d'un générateur de signaux externe à l'appareil de terrain (1),
- génération du signal de sortie par l'appareil de terrain (1) sur la base dudit au moins un premier signal d'entrée ainsi que dudit au moins un deuxième signal d'entrée et
- déclenchement d'une transmission du signal de sortie par l'intermédiaire d'un système à deux conducteurs (13) au moyen d'une interface d'alimentation à deux conducteurs (3) de l'appareil de terrain (1), **caractérisé en ce que**
pour générer le signal de sortie, un procédé de calcul parmi plusieurs procédés de calcul qui sont mémorisés dans l'appareil de terrain (1) est exécuté, dans lequel des procédés de calcul différents sont prévus pour des générateurs de signaux externes de types différents.
